# EUROPEAN PATENT APPLICATION

(11) **EP 4 372 243 A1**
(43) Date of publication of application: **22.05.2024**
(21) Application number: 22207991.5
(22) Date of filing: 17.11.2022
(51) Int. Cl.: F16C 32/04, F16C 39/06

(54) **A BEARING SYSTEM FOR AN ELONGATE SHAFT MEMBER OF A VEHICLE**

(71) Applicant: VOLVO TRUCK CORPORATION, 405 08 Göteborg (SE)
(72) Inventor: GUGLIELMO, J Francois, 69390 Charly (FR); CHAVRIER, Philemon, 69008 Lyon (FR); LAPERRIERE, Renaud, 69006 Lyon (FR)
(74) Representative: Zacco Sweden AB

(57) **Abstract**

A bearing system for an elongate shaft member of a vehicle, comprising a mechanical bearing configured to be mounted coaxially around and in contact with the shaft member for facilitating rotation of the shaft member, an electromagnetic bearing comprising a stator and a plurality of coils distributed circumferentially along an inner perimeter of the stator, the stator and the plurality of coils being configured to be mounted coaxially and in contactless manner around the shaft member, and a processor device which, based on the received vehicle data, is configured to selectively energize one or more of said plurality of coils in order to create one or more electromagnetic fields which provide(s) a resultant force on the shaft member that at least partly counteracts at least one shaft member affecting force, thereby reducing stress on the mechanical bearing when it is mounted to and in contact with the shaft member.

## Description

### TECHNICAL FIELD

The disclosure relates generally to a bearing system. In particular aspects, the disclosure relates to a bearing system for an elongate shaft member of a vehicle. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Nowadays, CO₂ emissions and fuel consumption are driving the development for transportation. The vehicle and transportation industry strive to reduce these factors in various ways. There is, however, still room for improvement.

### SUMMARY

According to a first aspect of the disclosure, the is provided a bearing system for an elongate shaft member of a vehicle, the shaft member comprising or being provided with magnetic material, the bearing system comprising:
- a mechanical bearing configured to be mounted coaxially around and in contact with the shaft member for facilitating rotation of the shaft member,
- an electromagnetic bearing comprising a stator and a plurality of coils distributed circumferentially along an inner perimeter of the stator, wherein the stator and the plurality of coils are configured to be mounted coaxially and in contactless manner around the shaft member, allowing the shaft member to function as a rotor, and
- a processor device configured to receive vehicle data containing information indicative of at least one shaft member affecting force caused by another part of the vehicle or by the operation of the vehicle,
wherein the processor device is configured to, based on the received vehicle data, selectively energize one or more of said plurality of coils in order to create one or more electromagnetic fields which provide(s) a resultant force on the shaft member that at least partly counteracts said at least one shaft member affecting force, thereby reducing stress on the mechanical bearing when it is mounted to and in contact with the shaft member.
The first aspect of the disclosure may seek to reduce the fuel consumption by limiting the friction and the heating in the traditional mechanical bearing. A technical benefit may include that by introducing an electromagnetic bearing, which may selectively be controlled, it can at least in some situations be activated to reduce the friction in the mechanical bearing, and thereby reducing the fuel consumption. A further benefit may be that by activating the electromagnetic bearing to reduce the stress on the mechanical bearing, the life of the mechanical bearing may be extended. By not completely replacing the mechanical bearing with an electromagnetic bearing, but rather supplementing the traditional mechanical bearing with and electromagnetic bearing, a safety aspect is also taken into account. In case of power loss, the traditional mechanical bearing can take over instantly without any inconvenience for the driver. It should be noted that although the bearing system may advantageously be implemented for a vehicle having an internal combustion engine, in order to reduce fuel consumption and CO₂ emissions, it may readily be applied to vehicles having other types of propulsion systems. For instance, the teachings of this disclosure, including the combination of an electromagnetic bearing and a mechanical bearing may advantageously be applied to battery electric vehicles (BEV), fuel cell electric vehicles (FCEV), hybrid vehicles, etc., in order to reduce energy consumption and/or to extend the service life of the mechanical bearing.

The elongate shaft member discussed in this disclosure may be any elongate shaft of the vehicle where a mechanical bearing has traditionally been used. For instance, the elongate shaft member may be a wheel axle or a drive shaft. Although the elongate shaft member may, in at least some examples comprise magnetic material, it should be understood that the elongate shaft member as such may, in at least some other examples, be nonmagnetic (i.e. not affected by a magnetic force). In the latter case, a magnetic material may be appropriately provided to the elongate shaft member. For instance, a magnetic sleeve may be provided to the elongate shaft member, or the elongate shaft member may be coated with a magnetic material, or any other appropriate action may be taken to provide the elongate shaft member with a magnetic material.

As indicated above, one or more of said plurality of coils may be selectively energized in order to create one or more electromagnetic fields which provides or provide a resultant force on the shaft member. In some examples, where there are a large number of coils distributed along the stator, it may suffice to only energize one coil for achieving a sufficiently accurate force that counteracts said at least one shaft member affecting force. In other examples, however, it may be more suitable to energize several coils to achieve a desired counteracting resultant force. In some examples, each one of the coils may be energized, but to different degree, thus, providing a balanced influence on the elongated shaft wherein coils being more energized may cause the elongate shaft to be displaced in a certain direction, while opposite coils, being less energized may still provide a certain dampening effect on said displacement.

In some examples, said vehicle data comprises data associated with a weight of the vehicle, wherein the processor device is configured to, based on said data associated with a weight of the vehicle, determine a load force acting on the shaft member, wherein the processor device is configured to selectively energize one or more of said plurality of coils in order to provide a resultant force on the shaft member that at least partly counteracts said load force acting on the shaft member. A technical benefit may include that the weight-related load force acting on the shaft member, which is normally a vertically directed force, can be easily counteracted by energizing one or more coils to provide a resultant counter force in the opposite direction. The counterforce may be varied depending on cargo being loaded onto or off the vehicle, i.e. depending on the current load force acting on the shaft member.

In some examples, said vehicle data comprises data associated with an acceleration or deceleration of the vehicle, wherein the processor device is configured to, based on said data associated with an acceleration or deceleration of the vehicle, determine an acceleration force or deceleration force acting on the shaft member, wherein the processor device is configured to selectively energize one or more of said plurality of coils in order to provide a resultant force on the shaft member that at least partly counteracts said acceleration force or deceleration force on the shaft member. A technical benefit may include that during acceleration and/or deceleration, the shaft member may be subjected to a high force, and consequently the mechanical bearing may be subjected to high stress, and that this can be counteracted by selectively energizing one or more coils. Furthermore, due to a certain delay between a request for acceleration or deceleration, to the vehicle actually performing said acceleration or deceleration, electromagnetic bearing may be activated in anticipation of the upcoming acceleration/deceleration force.

It should be understood that energizing the coils of the electromagnetic bearing also consumes energy. Thus, the benefit of energizing the coils should suitably be balanced to the energy consumption. Therefore, it may in some cases be reasonable to only energize the coils under certain circumstances. For example, when cruising along a road the processor device may determine that no energization of the coils should be done, or that only some coils should be energized to provide some relief to the magnetic bearing with respect to the weight carried by the shaft member. However, when the driver presses the accelerator pedal in order to increase the vehicle speed (for example during a take-over or due to driving into a road segment with higher allowable speed limit), then the processor device may receive input signal/data from the accelerator pedal that an acceleration request has been made. The processor device may suitably calculate or estimate the acceleration force that will temporarily affect the elongate shaft, and may therefore temporarily energize coils of the electromagnetic bearing in order to counteract that acceleration force during the acceleration phase of the vehicle.

In some examples, said vehicle data comprises data associated with a weight of the vehicle, wherein said vehicle data further comprises data associated with an acceleration or deceleration of the vehicle, wherein the processor device is configured to, based on said data associated with a weight of the vehicle and based on said data associated with an acceleration or deceleration of the vehicle, determine a resultant shaft member affecting force acting on the shaft member, wherein the processor device is configured to selectively energize one or more of said plurality of coils in order to provide a resultant counterforce on the shaft member that at least partly counteracts said resultant shaft member affecting force. A technical benefit may include that since the weight will normally provide a substantially vertical load onto the shaft member, while acceleration/deceleration will normally provide a substantially horizontal load on the shaft member, the processor device may calculate/estimate a resultant shaft member affecting force and thereby determine which coil(s) to energize in order to provide a suitable resultant counterforce onto the shaft member, in order to balance said resultant shaft member affecting force.

In some examples, said data associated with a weight of the vehicle is obtained by at least one of:
- calculations performed by the processor device,
- one or more load sensors measuring the load on the shaft member, and being in operative communication with the processor device,
- manual user input data.
A technical benefit may include that the weight calculations by processor devices are well known and can be based on e.g. vehicle behavior during acceleration/deceleration. For instance, by determining the torque delivered by the engine, the processor device can calculate the inertia of the vehicle, and as a consequence the weight (using the kinetic energy formula, *E* = *mv*²). It may be convenient to equip the vehicle with load sensors in order to get a direct measurement of the load on the shaft member. As regards the manual user input data, this may also be a simple and convenient way of providing the data associated with a weight. For instance, when a driver leaves a transportation hub, the vehicle can be placed on the scales of the hub to determine the load provided on each wheel axle. This may then be input manually by the driver,

In some examples, the processor device is configured to receive said data associated with an acceleration or deceleration of the vehicle by at least one of:
- an accelerator pedal signal,
- a brake pedal signal,
- one or more acceleration sensors in operative communication with the processor device.
A technical benefit may include that by using the accelerator pedal signal rather than an engine signal, the processor device will gain some time, such as a few milliseconds. The processor device may therefore control the electromagnetic bearing predictively, based on a predicted future requirement, rather than reacting to the actual situation (which may otherwise be the case if the acceleration data would be based on a signal from the engine). Similarly, a brake pedal signal may also gain some time to the processor device. Although predictive control is beneficial, it may be convenient to equip the vehicle with one or more acceleration sensors, which the processor can use in order to receive said data associated with an acceleration or deceleration of the vehicle.

In some examples, the processor device may be configured to receive traction motor/engine data containing information about the speed and/or torque of a traction motor/engine of the vehicle, wherein the processor device is configured to, based on the received traction motor/engine data, fine-tune said resultant force on the shaft member that at least partly counteracts said acceleration force or deceleration force on the shaft member. A technical benefit may include that the processor device may be allowed to do a first relatively rough calculation or estimation of the resultant force to be applied on the shaft member, and then when the processor device gets a somewhat delayed data associated with the traction motor or traction engine of the vehicle, which data is related to the acceleration/deceleration of the vehicle, the processor device can effectively fine-tune the resultant force so that an even more accurate counterforce is achieved.

In some examples, the processor device is configured to, based on the received vehicle data, energize two or more of said plurality of coils differently, thereby creating electromagnetic fields of different magnitudes which provide said resultant force on the shaft member. A technical benefit may be that various different directions of the resultant force may be achievable. A further technical benefit may be that dampening forces can be achieved when opposing coils are energized differently, thereby allowing for a smooth force control on the shaft member.

In some examples, the electromagnetic bearing further comprises a plurality of coil pairs distributed circumferentially along an inner perimeter of the stator, each coil pair comprising a first coil and a second coil which is axially spaced apart from the first coil, wherein the coil pairs are configured to be mounted coaxially and in contactless manner around the shaft member and such that the first and second coils are provided contactlessly on respective sides of a magnetic circular flange that forms part of the shaft member or that is mounted onto and around the shaft member. A technical benefit may include that this allows for lateral control of the shaft member. For instance, when driving through a curve, one of the coils in each coil pair may be energized, in order to achieve a lateral force on the shaft member (for example in the form of a wheel axle) in order to compensate for the lateral force due to driving through the curve. In some examples, the first and second coil in each coil pair may be energized, but to a different level, in order to provide a smooth and balanced lateral force to the shaft member.

In some examples, said electromagnetic bearing is a first electromagnetic bearing and said stator is a first stator, the bearing system further comprising a second electromagnetic bearing comprising a second stator and a plurality of coil pairs distributed circumferentially along an inner perimeter of the second stator, each coil pair of the second electromagnetic bearing comprising a first coil and a second coil which is axially spaced apart from the first coil, wherein the second stator and the plurality of coil pairs of the second electromagnetic bearing are configured to be mounted coaxially and in contactless manner around the shaft member and such that the first and second coils are provided contactlessly on respective sides of a magnetic circular flange that forms part of the shaft member or that is mounted onto and around the shaft member. Similarly, to above a technical benefit may include that this allows for lateral control of the shaft member. A technical benefit of having a first stator dedicated to radial control and a second stator dedicated to lateral control, may include that a more simple simultaneous control in the radial and lateral directions may be achieved by the processor device, as the electromagnetic fields are less likely to interfere with each other when the processor device compensates for both axial and radial loads on the shaft member at the same time.

According to a second aspect of the disclosure, there is provided a shaft member system comprising a shaft member and the bearing system of the first aspect (including any example thereof), wherein the mechanical bearing is mounted coaxially around and in contact with the shaft member and wherein the stator and said plurality of coils of the electromagnetic bearing are mounted coaxially and in contactless manner around the shaft member. The second aspect of the disclosure may seek to accomplish a corresponding effect and provide a corresponding technical benefit as the bearing system of the first aspect (including any example thereof).

According to a third aspect of the disclosure, there is provided a vehicle comprising a bearing system of the first aspect (including any example thereof) or a shaft member system of the second aspect (including any example thereof). The third aspect of the disclosure may seek to accomplish a corresponding effect and provide a corresponding technical benefit as the bearing system of the first aspect (including any example thereof).

According to a fourth aspect of the disclosure, there is provided a computer-implemented method of controlling a bearing system for an elongate shaft member of a vehicle, the shaft member being of the type that comprises or is provided with magnetic material, the bearing system comprising a mechanical bearing mounted coaxially around and in contact with the shaft member for facilitating rotation of the shaft member, and an electromagnetic bearing comprising a stator and a plurality of coils distributed circumferentially along an inner perimeter of the stator, wherein the stator and the plurality of coils are mounted coaxially and in contactless manner around the shaft member, allowing the shaft member to function as a rotor, the method comprising:
- receiving, by a processor device of a computer system, vehicle data containing information indicative of at least one shaft member affecting force caused by another part of the vehicle or by the operation of the vehicle, and
- based on the received vehicle data, controlling, by the processor device, one or more of said plurality of coils to be energized in order to create one or more electromagnetic fields which provide(s) a resultant force on the shaft member that at least partly counteracts said at least one shaft member affecting force, thereby reducing stress on the mechanical bearing when it is mounted to and in contact with the shaft member. The fourth aspect of the disclosure may seek to accomplish a corresponding effect and provide a corresponding technical benefit as the bearing system of the first aspect (including any example thereof).

In the following some examples of the method of the fourth aspect will be presented. The technical benefits of the examples may include those presented for the corresponding examples of the bearing system of the first aspect.

In some examples, said vehicle data comprises data associated with a weight of the vehicle, the method further comprising:
- based on said data associated with a weight of the vehicle, determining, by the processor device, a load force acting on the shaft member, and
- selectively energizing, by the processor device, one or more of said plurality of coils in order to provide a resultant force on the shaft member that at least partly counteracts said load force acting on the shaft member.

In some examples, said vehicle data comprises data associated with an acceleration or deceleration of the vehicle, the method further comprising:
- based on said data associated with an acceleration or deceleration of the vehicle, determining, by the processor device, an acceleration force or deceleration force acting on the shaft member, and
- selectively energizing, by the processor device, one or more of said plurality of coils in order to provide a resultant force on the shaft member that at least partly counteracts said acceleration force or deceleration force on the shaft member.

In some examples, said vehicle data comprises data associated with a weight of the vehicle, wherein said vehicle data further comprises data associated with an acceleration or deceleration of the vehicle, the method comprising:
- based on said data associated with a weight of the vehicle and based on said data associated with an acceleration or deceleration of the vehicle, determining, by the processor device, a resultant shaft member affecting force acting on the shaft member,
- selectively energizing, by the processor device, one or more of said plurality of coils in order to provide a resultant counterforce on the shaft member that at least partly counteracts said resultant shaft member affecting force.

In some examples, the method further comprises:
- based on the received vehicle data, energizing, by the processor device, two or more of said plurality of coils differently, thereby creating electromagnetic fields of different magnitudes which provide said resultant force on the shaft member.

According to a fifth aspect of the disclosure, there is provided a computer system comprising the processor device configured to perform the method of the fourth aspect (including any example thereof). The fifth aspect of the disclosure may seek to accomplish a corresponding effect and provide a corresponding technical benefit as the method of the fourth aspect (including any example thereof).

According to a fifth aspect of the disclosure, there is provided a computer system comprising the processor device configured to perform the method of the fourth aspect (including any example thereof). The fifth aspect of the disclosure may seek to accomplish a corresponding effect and provide a corresponding technical benefit as the method of the fourth aspect (including any example thereof).

According to a sixth aspect of the disclosure, there is provided a computer program product comprising program code for performing, when executed by the processor device, the method of the fourth aspect (including any example thereof). The sixth aspect of the disclosure may seek to accomplish a corresponding effect and provide a corresponding technical benefit as the method of the fourth aspect (including any example thereof).

According to a seventh aspect of the disclosure, there is provided a control system comprising one or more control units configured to perform the method of the fourth aspect (including any example thereof). The seventh aspect of the disclosure may seek to accomplish a corresponding effect and provide a corresponding technical benefit as the method of the fourth aspect (including any example thereof).

According to an eighth aspect of the disclosure, there is provided a non-transitory computer-readable storage medium comprising instructions, which when executed by the processor device, cause the processor device to perform the method of the fourth aspect (including any example thereof). The eighth aspect of the disclosure may seek to accomplish a corresponding effect and provide a corresponding technical benefit as the method of the fourth aspect (including any example thereof).

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** illustrates an exemplary vehicle in which a bearing system according to the present disclosure may be implemented.
**FIG. 2** is a very schematic illustration of a bearing system according to at least one example of the present disclosure.
**FIGS. 3** and **4** are schematic illustrations of at least one example of components of an electromagnetic bearing that may be implemented in a bearing system in accordance with at least some examples of the present disclosure.
**FIG. 5** is a schematic illustration of at least another example of components of an electromagnetic bearing that may be implemented in a bearing system in accordance with at least some examples of the present disclosure.
**FIG. 6** is a schematic illustration of at least yet another example of components of an electromagnetic bearing that may be implemented in a bearing system in accordance with at least some examples of the present disclosure.
**FIG. 7** is a schematic illustration of acts included in a computer-implemented method of the present disclosure, in accordance with at least one example.
**FIG. 8** is a schematic diagram of an exemplary computer system for implementing examples disclosed herein, according to one example.
**FIG. 9** schematically illustrates a processor device according to one example.
**FIG. 10** schematically illustrates a computer program product according to one example.

### DETAILED DESCRIPTION

Aspects set forth below represent the necessary information to enable those skilled in the art to practice the disclosure.

Rotating vehicle axles and shafts are often provided with a mechanical bearing (such as a ball bearing) for facilitating the rotation. However, due to loads the friction between the mechanical bearing and the axle/shaft may increase, thereby increasing fuel/energy consumption. Furthermore, the stress on the mechanical bearing affects the service lift of the mechanical bearing. By providing a bearing system which, in addition to the traditional mechanical bearing, comprises an electromagnetic bearing which can be activated as desired, for example in high-load situations, the friction and the stress on the mechanical bearing may be reduced, thereby reducing enabling fuel/energy consumption to be reduces and increasing the service life of the mechanical bearing. In addition to the above benefits, keeping the mechanical bearing provides a higher level of safety, e.g. in case of power failure or other unexpected failure on the electromagnetic bearing, in which case the mechanical bearing will still be functional.

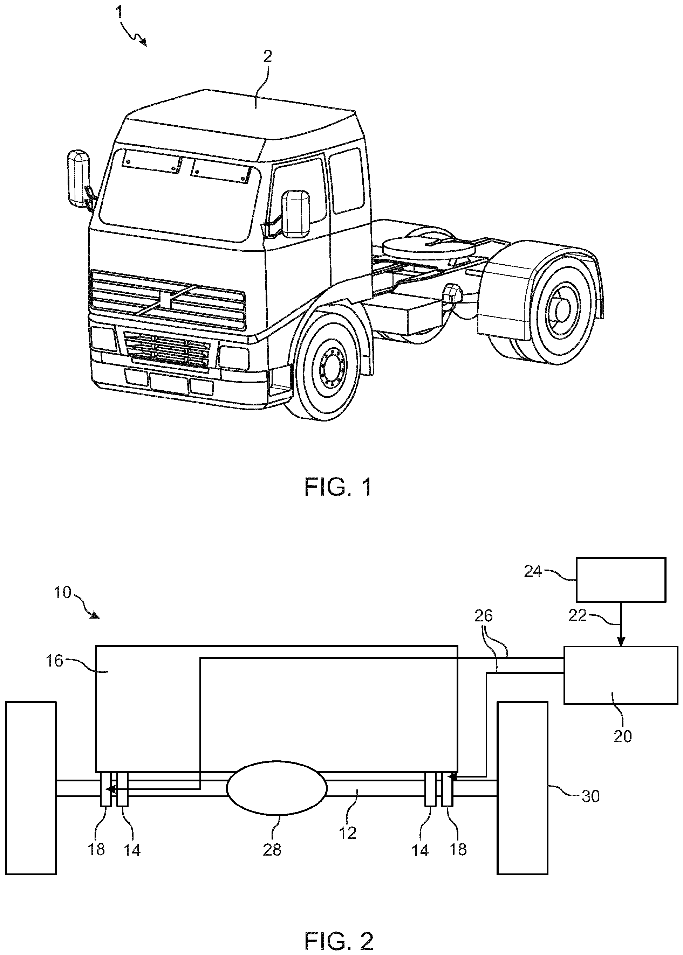

**FIG. 1** illustrates an exemplary vehicle 1 in which a bearing system according to the present disclosure may be implemented. In this example, the vehicle 1 is a heavy-duty vehicle in the form of a tractor unit. The tractor unit may be powered by an internal combustion engine (ICE). However, the bearing system of the present disclosure may also be implemented in other vehicles as well, such as fuel cell electric vehicles (FCEVs), battery electric vehicle (BEVs) or hybrid vehicles. The vehicle 1 comprises a traction engine or traction motor (not illustrated) for propelling the road wheels of the vehicle. For instance, the propulsion power may be submitted along a drive shaft via a differential to a wheel axle on which the road wheels are mounted. The wheel axle and/or the drive shaft, or any other elongate rotating shaft member of the vehicle 1, may be provided with a bearing system of this disclosure. Although a tractor unit has been illustrated, it should be understood that the teachings of the present disclosure may also be implemented in other types of vehicles, such as busses, construction equipment and passenger cars. The illustrated vehicle 1 comprises a cabin 2 in which a driver may operate the vehicle. However, in other exemplary embodiments the vehicle may be an autonomous, i.e. self-driving, vehicle.

**FIG. 2** is a very schematic illustration of a bearing system according to at least one example of the present disclosure. Although the bearing system of **FIG. 2** is illustrated in relation to wheel axles provided with road wheels, it should be understood that the bearing system may be implemented in connection with other elongate shaft members as well. Therefore, in the following, reference will be made to an elongate shaft member in general.

Thus, **FIG. 2** illustrates a bearing system 10 for an elongate shaft member 12 of a vehicle. The elongate shaft member 12 comprises or is provided with magnetic material. The bearing system 10 comprises a mechanical bearing 14 (in the illustration two mechanical bearings 14 are illustrated, one for the left side and one for the right side of the vehicle). The mechanical bearing 14 is configured to be mounted coaxially around and in contact with the shaft member 12 for facilitating rotation of the shaft member 12. **FIG. 2** schematically represents a mounted state of the mechanical bearing 14.

A load 16, such as a truck load, is schematically illustrated. The load 16 may, for example, via a vehicle chassis and the mechanical bearing 14 exert a force on the elongate shaft member 12. That force is herein referred to as a *shaft member affecting force.* The load 16 may vary from one occasion to another. For instance, when the vehicle carries heavy cargo, the shaft member affecting force related to the weight will be greater than if the vehicle is substantially empty. The weight will normally cause a substantially vertical shaft member affecting force, directed downwardly towards the ground. However, another shaft member affecting force that occurs frequently is due to acceleration or deceleration of the vehicle, which will cause a substantially horizontal shaft member affecting force. In practice, during acceleration and/or deceleration, the combination of weight and acceleration/deceleration may provide a combined or resulting shaft member affecting force having a resultant in an oblique direction to the horizontal and the vertical.

As schematically illustrated in **FIG. 2**, the bearing system 10 also comprises an electromagnetic bearing 18 (in the illustration two electromagnetic bearings 18 are illustrated, one for the left side and one for the right side of the vehicle). The bearing system 10 also comprises a processor device 20 which is configured to receive vehicle data containing information indicative of at least one shaft member affecting force caused by another part of the vehicle or by the operation of the vehicle. An example of a shaft member affecting force caused by another part of the vehicle may be a weight related force, such as the previously discussed load 16 due to cargo carried by the vehicle, the weight of the chassis, etc. An example of a shaft member affecting force caused by the operation of the vehicle may be a force cause by an acceleration maneuver or a deceleration maneuver of the vehicle. The processor device 20 may receive the vehicle data 22 from at least one input device 24. Such an input device 24 may, for instance, include one or more of:
- a sensor, such as a load sensor or an acceleration sensor;
- a pedal device, such as an acceleration pedal or a brake pedal, or a controller associated to such a pedal device;
- a traction engine/motor or a controller associated to such a traction engine/motor;
- a user interface for receiving manual user input data.

The processor device 20 is configured to, based on the received vehicle data 22, activate the electromagnetic bearing 18 (here illustrated by control signal 26) to provide a counterforce on the shaft member 12 that at least partly counteracts said at least one shaft member affecting force, thereby reducing stress on the mechanical bearing 14 when it is mounted to and in contact with the shaft member 12.

Although **FIG. 2** illustrates the elongate shaft member 12 in the form of a wheel axle extending between a differential 28 and a wheel 30 of the vehicle, the bearing system 10 may be implemented for other elongate shaft members as well.

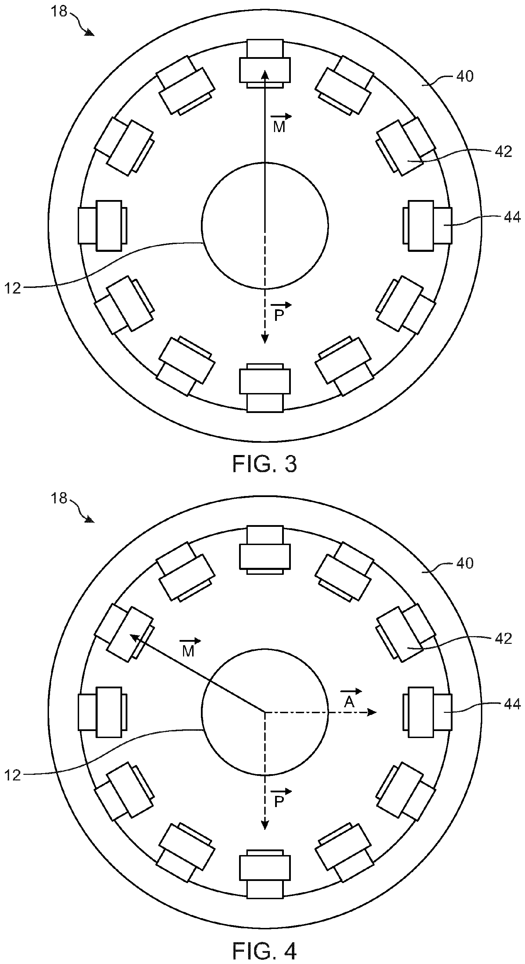

Some examples of components of an electromagnetic bearing that may be implemented in the bearing system 10 of this disclosure will be discussed in more detail with respect to **FIGS. 3-6**, and how the processor device 20 may control the electromagnetic bearing 18 to create the desired counterforce.

**FIGS. 3** and **4** are schematic illustrations of at least one example of components of an electromagnetic bearing that may be implemented in a bearing system in accordance with at least some examples of the present disclosure. Starting with **FIG. 3**, it schematically illustrates the elongate shaft member 12 in the center. The shaft member 12 will function as a rotor. The electromagnetic bearing 18 comprises a stator 40 and a plurality of coils 42 distributed circumferentially along an inner perimeter of the stator 40. The coils 42 may suitably be evenly distributed along the inner perimeter of the stator 40. Although twelve coils 42 have been illustrated, other number of coils are conceivable. There may be more coils or there may be fewer coils. It is, however, recommended to have at least three coils 42. Each coil 42 may suitably be wound around a respective pole 44 projecting radially inwardly from the stator 40. As can be seen in **FIG. 3**, the stator 40 and the plurality of coils 42 are mounted coaxially and in contactless manner around the shaft member 12. **FIG. 3** illustrates that the shaft member 12 is subjected to a downwardly directed shaft member affecting force *P*. This may stem from the weight carried by the shaft member 12 and the mechanical bearing 18. The processor device (e.g. processor device 20 in **FIG. 2**) can control the activation of one or more coils 42, by energizing them. Thus, the processor device is configured to, based on the received vehicle data, selectively energize one or more of the plurality of coils 42 in order to create one or more electromagnetic fields which provide(s) a resultant force *M* (a counterforce) on the shaft member 12 that at least partly counteracts said at least one shaft member affecting force *P*. In the present illustration, the resultant force *M* is directed upwardly, i.e. in opposite direction to the shaft member affecting force *P*. Furthermore, the processor device may suitably control the resultant force *M* to have a magnitude which substantially corresponds to the magnitude of the shaft member affecting force *P*, however, in the opposite direction. In this way, the friction and stress on the mechanical bearing (e.g. mechanical bearing 14 in **FIG. 2**) will be reduced. To obtain a balanced counterforce, a plurality of the coils 42 may be energized, but to different extents. In fact, all the coils 42 may be energized. The plurality of coils 42 surrounding the elongate shaft member 12 may be resembled to a shaft being suspended by a plurality of springs distributed around the circumference of the shaft, wherein one or more of the springs may have a different spring constants than the others (similarly to the coils 42 being energized differently around the elongate shaft member 12). In this way a smooth dampened control may be achieved.

Turning now to **FIG. 4**, there is illustrated that in addition to the downwardly directed shaft member affecting force *P*, the shaft member 12 is also subjected to an acceleration force, manifested as a substantially horizontally directed shaft member affecting force *A.* The processor device may determine the resultant of the forces *P* and *A*, both with respect to magnitude and direction and may, based on such determination, energize one or more of the plurality of coils 42 to create a counterforce, i.e. counteracting resultant force *M*.

As can be understood from **FIGS. 3** and **4** the processor device can control a counteracting resultant force *M* which is provided in a radial direction with respect to the shaft member 12. As will be illustrated in the following, in some examples, the processor device may be configured to control a counteracting force which is provided in an axial direction with respect to the shaft member 12.

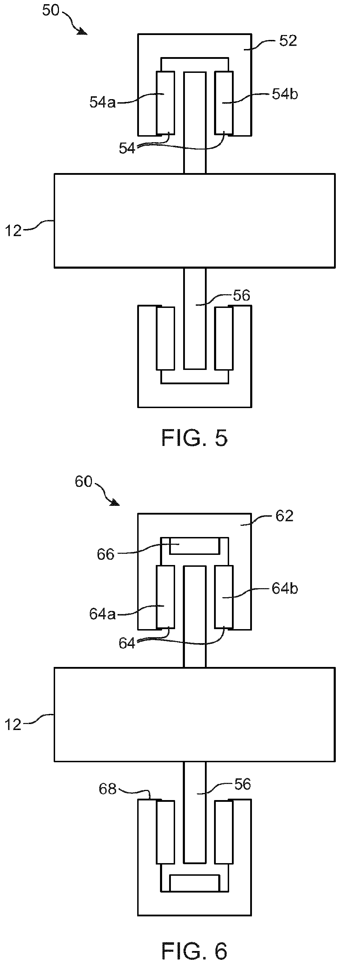

**FIG. 5** is a schematic illustration of at least another example of components of an electromagnetic bearing 50 that may be implemented in a bearing system in accordance with at least some examples of the present disclosure. In at least some examples, the electromagnetic bearing 50 illustrated in **FIG. 5** may be provided as an additional or second electromagnetic bearing, i.e. in addition to the ones illustrated in **FIGS. 2-4**. The setup illustrated in **FIG. 5** is particularly advantages for lateral control, which may be desirable for example when driving through a curve.

From the above, it may be understood that **FIGS. 3-4** may illustrate a first electromagnetic bearing 18 of the bearing system, having a first stator 40, while **FIG. 5** may illustrate a second electromagnetic bearing 50 of the bearing system, having a second stator 52. In **FIG. 5** a plurality of coil pairs 54 are distributed circumferentially along an inner perimeter of the second stator 52 (only two coil pairs 54 can be seen in this cross-sectional view). Each coil pair 54 comprises a first coil 54a and a second coil 54b. The second coil 54b is axially (laterally) spaced apart from the first coil 54a. The second stator 52 and the plurality of coil pairs 54 are mounted coaxially and in contactless manner around the shaft member 12. Furthermore, in each coil pair 54, the first coil 54a and second coil 54b are provided contactlessly on respective sides of a magnetic circular flange 56 that forms part of the shaft member 12 or that is mounted onto and around the shaft member 12. The processor device may, for example energize the first coil 54a in each coil pair 54 (and possibly also the second coil 54b but to a lower level) in order to provide an axially directed force to the flange 56 in one direction, and thus indirectly to the shaft member 12. Conversely, the processor device may energize the second coil 54b in each coil pair 54 (and possibly also the first coil 54a but to a lower level) in order to provide an axially directed force to the flange 56 in an opposite direction. When driving through a curve, and assuming the shaft member 12 is a wheel axle, the axially directed force provided by the coils 54a and/or 54b will be in the lateral direction of the vehicle, and may thus be used for counteracting the natural forces that the vehicle and the shaft member 12 are subjected to when the vehicle is driving through the curve.

**FIG. 6** is a schematic illustration of at least yet another example of components of an electromagnetic bearing 60 that may be implemented in a bearing system in accordance with at least some examples of the present disclosure. In this example, the axial (lateral) and radial counterforce control can be combined in one electromagnetic bearing 60 having one stator 62. As illustrated in **FIG. 6**, in addition to having coil pairs 64 (with first and second coils 64a, 64b) similarly to the coil pairs 54 illustrated in **FIG. 5**, there are also provided coils 66 radially of the flange 56, whereby the processor device can also control a radially directed resultant counterforce to the shaft member 12 (via the flange 56). The stator 62 may of course be designed differently in other examples, and the coils 66 for providing radially directed counterforce to the shaft member 12, may be located elsewhere. For instance, such coils may be located closer to the shaft member 12, for example at the inner ends of the stator as indicated at reference numeral 68.

The combination of the shaft member 12 and the bearing system 10 (including any examples thereof) of this disclosure, including for example the electromagnetic bearings 18, 50, 60 illustrated in **FIGS. 2-6**, may be considered to form part of a shaft member system. Thus, in such a shaft member system, the mechanical bearing 14 is mounted coaxially around and in contact with the shaft member 12, and the stator 40, 52, 62 and the plurality of coils 42, 54a, 54b, 64a, 64b of the electromagnetic bearing are mounted coaxially and in contactless manner around the shaft member 12. In accordance with this disclosure, a vehicle, such as the vehicle 1 in **FIG. 1** may include such a shaft member system.

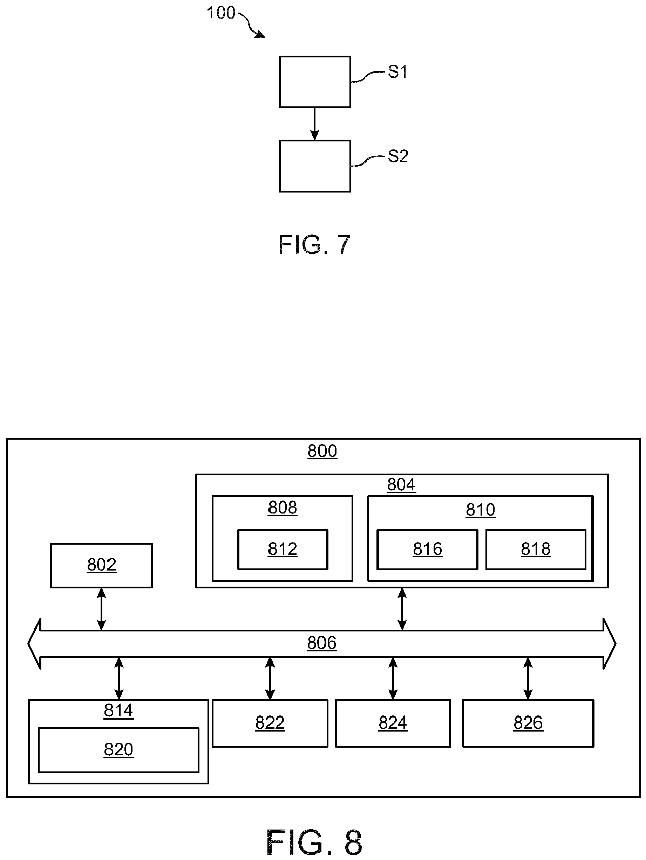

**FIG.** 7 is a schematic illustration of acts included in a computer-implemented method 100 of the present disclosure, in accordance with at least one example. In particular, **FIG. 7** illustrates a computer-implemented method 100 of controlling a bearing system for an elongate shaft member of a vehicle, the shaft member being of the type that comprises or is provided with magnetic material, the bearing system comprising a mechanical bearing mounted coaxially around and in contact with the shaft member for facilitating rotation of the shaft member, and an electromagnetic bearing comprising a stator and a plurality of coils distributed circumferentially along an inner perimeter of the stator, wherein the stator and the plurality of coils are mounted coaxially and in contactless manner around the shaft member, allowing the shaft member to function as a rotor, the method comprising:
- in a step S1, receiving, by a processor device of a computer system, vehicle data containing information indicative of at least one shaft member affecting force caused by another part of the vehicle or by the operation of the vehicle, and
- in a step S2, based on the received vehicle data, controlling, by the processor device, one or more of said plurality of coils to be energized in order to create one or more electromagnetic fields which provide(s) a resultant force on the shaft member that at least partly counteracts said at least one shaft member affecting force, thereby reducing stress on the mechanical bearing when it is mounted to and in contact with the shaft member.

**FIG. 8** is a schematic diagram of an exemplary computer system 800 for implementing examples disclosed herein. The computer system 800 is adapted to execute instructions from a computer-readable medium to perform these and/or any of the functions or processing described herein. The computer system 800 may be connected (e.g., networked) to other machines in a LAN, an intranet, an extranet, or the Internet. While only a single device is illustrated, the computer system 800 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 800 may comprise at least one computing device or electronic device capable of including firmware, hardware, and/or executing software instructions to implement the functionality described herein. The computer system 800 may include a processor device 802 (may also be referred to as a control unit), a memory 804, and a system bus 806. The processor device 802 may, for example be the processor device 20 in **FIG. 2**. The computer system 800 may include at least one computing device having the processor device 802. The system bus 806 provides an interface for system components including, but not limited to, the memory 804 and the processor device 802. The processor device 802 may include any number of hardware components for conducting data or signal processing or for executing computer code stored in memory 804. The processor device 802 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 806 may be any of several types of bus structures that may further interconnect to a memory bus (with or without a memory controller), a peripheral bus, and/or a local bus using any of a variety of bus architectures. The memory 804 may be one or more devices for storing data and/or computer code for completing or facilitating methods described herein. The memory 804 may include database components, object code components, script components, or other types of information structure for supporting the various activities herein. Any distributed or local memory device may be utilized with the systems and methods of this description. The memory 804 may be communicably connected to the processor device 802 (e.g., via a circuit or any other wired, wireless, or network connection) and may include computer code for executing one or more processes described herein. The memory 804 may include non-volatile memory 808 (e.g., read-only memory (ROM), erasable programmable read-only memory (EPROM), electrically erasable programmable read-only memory (EEPROM), etc.), and volatile memory 810 (e.g., random-access memory (RAM)), or any other medium which can be used to carry or store desired program code in the form of machine-executable instructions or data structures and which can be accessed by a computer or other machine with a processor device 802. A basic input/output system (BIOS) 812 may be stored in the non-volatile memory 808 and can include the basic routines that help to transfer information between elements within the computer system 800.

The computer system 800 may further include or be coupled to a non-transitory computer-readable storage medium such as the storage device 814, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 814 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 814 and/or in the volatile memory 810, which may include an operating system 816 and/or one or more program modules 818. All or a portion of the examples disclosed herein may be implemented as a computer program product 820 stored on a transitory or non-transitory computer-usable or computer-readable storage medium (e.g., single medium or multiple media), such as the storage device 814, which includes complex programming instructions (e.g., complex computer-readable program code) to cause the processor device 802 to carry out the steps described herein. Thus, the computer-readable program code can comprise software instructions for implementing the functionality of the examples described herein when executed by the processor device 802. The processor device 802 may serve as a controller or control system for the computer system 800 that is to implement the functionality described herein.

The computer system 800 also may include an input device interface 822 (e.g., input device interface and/or output device interface). The input device interface 822 may be configured to receive input and selections to be communicated to the computer system 800 when executing instructions, such as from a keyboard, mouse, touch-sensitive surface, etc. Such input devices may be connected to the processor device 802 through the input device interface 822 coupled to the system bus 806 but can be connected through other interfaces such as a parallel port, an Institute of Electrical and Electronic Engineers (IEEE) 1394 serial port, a Universal Serial Bus (USB) port, an IR interface, and the like. The computer system 800 may include an output device interface 824 configured to forward output, such as to a display, a video display unit (e.g., a liquid crystal display (LCD) or a cathode ray tube (CRT)). The computer system 800 may also include a communications interface 826 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

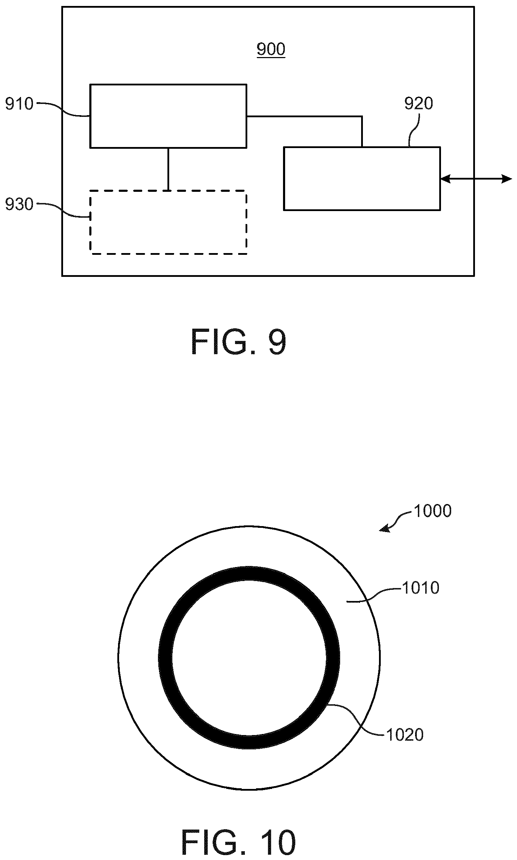

**FIG. 9** schematically illustrates a processor device 900 according to at least one exemplary embodiment of the present disclosure. The processor device 900 in **FIG. 9** may, for instance, correspond to the processor device 802 in **FIG. 8** and/or the processor device 20 in **FIG. 2**. Continuing with **FIG. 9**, it illustrates, in terms of a number of functional units, the components of a processor device 900 according to exemplary embodiments of the discussions herein. The processor device 900 may be comprised in any bearing system disclosed herein. Processing circuitry 910 may be provided using any combination of one or more of a suitable central processing unit CPU, multiprocessor, microcontroller, digital signal processor DSP, etc., capable of executing software instructions stored in a computer program product, e.g. in the form of a storage medium 930. The processing circuitry 910 may further be provided as at least one application specific integrated circuit ASIC, or field programmable gate array FPGA.

Particularly, the processing circuitry 910 is configured to cause the processor device 900 to perform a set of operations, or steps, such as the method 100 discussed in connection to **FIG. 7** and others examples discussed throughout this disclosure. For example, the storage medium 930 may store the set of operations, and the processing circuitry 910 may be configured to retrieve the set of operations from the storage medium 930 to cause the processor device 900 to perform the set of operations. The set of operations may be provided as a set of executable instructions. Thus, the processing circuitry 910 is thereby arranged to execute exemplary methods as herein disclosed.

The storage medium 930 may also comprise persistent storage, which, for example may be any single one or combination of magnetic memory, optical memory, solid state memory or even remotely mounted memory.

The processor device 900 may further comprise an interface 920 for communications with at least one external device such as the coils of the electromagnetic bearing, load sensors, accelerator pedal, brake pedal, acceleration sensors and traction motor/engine discussed herein. As such, the interface 920 may comprise one or more transmitters and receivers, comprising analogue and digital components and a suitable number of ports for wireline or wireless communication.

The processing circuitry 910 controls the general operation of the processor device 900, e.g. by sending data and control signals to the interface 920 and the storage medium 930, by receiving data and reports from the interface 920, and by retrieving data and instructions form the storage medium 930. Other components, as well as the related functionality, of the processor device 900 are omitted in order not to obscure the concepts presented herein.

**FIG. 10** schematically illustrates a computer program product 1000 according to one example. More specifically, **FIG. 10** illustrates a non-transitory computer-readable storage medium 1010 carrying a computer program comprising program code means 1020 for performing the methods exemplified in **FIG. 7** and any examples thereof, when executed by the processor device. The computer-readable storage medium 1010 and the program code means 1020 may together form the computer program product 1000.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A bearing system for an elongate shaft member of a vehicle, the shaft member comprising or being provided with magnetic material, the bearing system comprising:
- a mechanical bearing configured to be mounted coaxially around and in contact with the shaft member for facilitating rotation of the shaft member,
- an electromagnetic bearing comprising a stator and a plurality of coils distributed circumferentially along an inner perimeter of the stator, wherein the stator and the plurality of coils are configured to be mounted coaxially and in contactless manner around the shaft member, allowing the shaft member to function as a rotor, and
- a processor device configured to receive vehicle data containing information indicative of at least one shaft member affecting force caused by another part of the vehicle or by the operation of the vehicle,
wherein the processor device is configured to, based on the received vehicle data, selectively energize one or more of said plurality of coils in order to create one or more electromagnetic fields which provide(s) a resultant force on the shaft member that at least partly counteracts said at least one shaft member affecting force, thereby reducing stress on the mechanical bearing when it is mounted to and in contact with the shaft member.

2. The bearing system of claim 1, wherein said vehicle data comprises data associated with a weight of the vehicle,
wherein the processor device is configured to, based on said data associated with a weight of the vehicle, determine a load force acting on the shaft member,
wherein the processor device is configured to selectively energize one or more of said plurality of coils in order to provide a resultant force on the shaft member that at least partly counteracts said load force acting on the shaft member.

3. The bearing system of claim 1 or 2, wherein said vehicle data comprises data associated with an acceleration or deceleration of the vehicle,
wherein the processor device is configured to, based on said data associated with an acceleration or deceleration of the vehicle, determine an acceleration force or deceleration force acting on the shaft member,
wherein the processor device is configured to selectively energize one or more of said plurality of coils in order to provide a resultant force on the shaft member that at least partly counteracts said acceleration force or deceleration force on the shaft member.

4. The bearing system of claim 1, wherein said vehicle data comprises data associated with a weight of the vehicle, wherein said vehicle data further comprises data associated with an acceleration or deceleration of the vehicle,
wherein the processor device is configured to, based on said data associated with a weight of the vehicle and based on said data associated with an acceleration or deceleration of the vehicle, determine a resultant shaft member affecting force acting on the shaft member,
wherein the processor device is configured to selectively energize one or more of said plurality of coils in order to provide a resultant counterforce on the shaft member that at least partly counteracts said resultant shaft member affecting force.

5. The bearing system of claim 2 or 4, wherein said data associated with a weight of the vehicle is obtained by at least one of:
- calculations performed by the processor device,
- one or more load sensors measuring the load on the shaft member, and being in operative communication with the processor device,
- manual user input data.

6. The bearing system of claim 3 or 4, wherein the processor device is configured to receive said data associated with an acceleration or deceleration of the vehicle by at least one of:
- an accelerator pedal signal,
- a brake pedal signal,
- one or more acceleration sensors in operative communication with the processor device.

7. The bearing system of claim 6, wherein the processor device is configured to receive traction motor/engine data containing information about the speed and/or torque of a traction motor/engine of the vehicle, wherein the processor device is configured to, based on the received traction motor/engine data, fine-tune said resultant force on the shaft member that at least partly counteracts said acceleration force or deceleration force on the shaft member.

8. The bearing system of any one of claims 1-7, wherein the processor device is configured to, based on the received vehicle data, energize two or more of said plurality of coils differently, thereby creating electromagnetic fields of different magnitudes which provide said resultant force on the shaft member.

9. The bearing system of any of claims 1-8, wherein the electromagnetic bearing further comprises a plurality of coil pairs distributed circumferentially along an inner perimeter of the stator, each coil pair comprising a first coil and a second coil which is axially spaced apart from the first coil, wherein the coil pairs are configured to be mounted coaxially and in contactless manner around the shaft member and such that the first and second coils are provided contactlessly on respective sides of a magnetic circular flange that forms part of the shaft member or that is mounted onto and around the shaft member.

10. The bearing system of any of claims 1-9, wherein said electromagnetic bearing is a first electromagnetic bearing and said stator is a first stator, the bearing system further comprising a second electromagnetic bearing comprising a second stator and a plurality of coil pairs distributed circumferentially along an inner perimeter of the second stator, each coil pair of the second electromagnetic bearing comprising a first coil and a second coil which is axially spaced apart from the first coil, wherein the second stator and the plurality of coil pairs of the second electromagnetic bearing are configured to be mounted coaxially and in contactless manner around the shaft member and such that the first and second coils are provided contactlessly on respective sides of a magnetic circular flange that forms part of the shaft member or that is mounted onto and around the shaft member.

11. A shaft member system comprising a shaft member and the bearing system of any one of claims 1-10, wherein the mechanical bearing is mounted coaxially around and in contact with the shaft member and wherein the stator and said plurality of coils of the electromagnetic bearing are mounted coaxially and in contactless manner around the shaft member.

12. A vehicle comprising a bearing system of any of claims 1-10 or a shaft member system of claim 11.

13. A computer-implemented method of controlling a bearing system for an elongate shaft member of a vehicle, the shaft member being of the type that comprises or is provided with magnetic material, the bearing system comprising a mechanical bearing mounted coaxially around and in contact with the shaft member for facilitating rotation of the shaft member, and an electromagnetic bearing comprising a stator and a plurality of coils distributed circumferentially along an inner perimeter of the stator, wherein the stator and the plurality of coils are mounted coaxially and in contactless manner around the shaft member, allowing the shaft member to function as a rotor, the method comprising:
- receiving, by a processor device of a computer system, vehicle data containing information indicative of at least one shaft member affecting force caused by another part of the vehicle or by the operation of the vehicle, and
- based on the received vehicle data, controlling, by the processor device, one or more of said plurality of coils to be energized in order to create one or more electromagnetic fields which provide(s) a resultant force on the shaft member that at least partly counteracts said at least one shaft member affecting force, thereby reducing stress on the mechanical bearing when it is mounted to and in contact with the shaft member.

14. The computer system comprising the processor device configured to perform the method of claim 13.

15. A computer program product comprising program code for performing, when executed by the processor device, the method of claim 13.

16. A control system comprising one or more control units configured to perform the method according to claim 13.

17. A non-transitory computer-readable storage medium comprising instructions, which when executed by the processor device, cause the processor device to perform the method of claim 13.
